# EUROPÄISCHE PATENTSCHRIFT

(11) **EP 0 799 576 B1**
(45) Veröffentlichungstag und Bekanntmachung des Hinweises auf die Patenterteilung: **04.12.2002**
(21) Anmeldenummer: 97105394.7
(22) Anmeldetag: 01.04.1997
(51) Int. Cl.: A23G 9/26, A23G 7/00, B65G 59/06, B65G 17/26

(54) **Vorrichtung zum Vereinzeln und Einstecken von Eisstielen in eine Gefriermaschine für Speiseeis**
Stick separating and inserting device for ice cream freezing machine
Dispositif pour séparation et implantation de bâtons sur une machine de congélation de crèmes glacées

(30) Priorität: 03.04.1996 DE 19613343
(43) Veröffentlichungstag der Anmeldung: 08.10.1997
(73) Patentinhaber: Lembke GmbH Stick Inserter Systems, 23617 Stockelsdorf (DE)
(72) Erfinder: Lembke, Manfred, 23617 Stockelsdorf (DE)
(74) Vertreter: Vollmann, Heiko, Dipl.-Ing.

(56) Entgegenhaltungen:
- FR-A- 1 532 682
- FR-A- 2 307 474
- GB-A- 674 390
- US-A- 2 953 105
- US-A- 4 801 063
- US-A- 4 842 181

## Beschreibung

Die Erfindung geht aus von einer Vorrichtung zum Vereinzeln und Einstecken von Eisstielen in eine Gefriermaschine für Speiseeis gemäß dem Oberbegriff des Anspruches 1.

Eine derartige Vorrichtung ist in der DE-OS 25 17 400 beschrieben. Bei dieser Vorrichtung umfaßt der Zugmitteltrieb zwei um Umlenkrollen geführte Endlosketten, an deren Oberseite eine Vielzahl von gemeinsamen Mitnehmerplatten befestigt ist, die mit nach oben offenen Aufnahmefächern für die aus einem Vorrat von oben ankommenden Eisstiele versehen sind. Es sind so viele Mitnehmerplatten mit jeweils einem Aufnahmefach vorgesehen, wie maximal Eisstiele in die einzelnen, mit Speiseeis gefüllten Formen der zu beschickenden Speiseeisgefriermaschine eingesteckt werden sollen. Die vereinzelten und in einer Zwischenposition in den Aufnahmefächern zur Entnahme bereitliegenden Eisstiele werden von einer Einsteckeinrichtung aus den Aufnahmefächern entnommen und in die mit dem Speiseeis gefüllten Formen der Gefriermaschine eingesteckt.

Nachteilig bei dieser Vorrichtung ist, daß sie im Fall ihrer Umstellung auf eine andere Lieferzahl von Eisstielen, weil eine andere Anzahl von Eisformen der zu beschickenden Gefriermaschine mit Eisstielen versorgt werden soll, für eine relativ lange Betriebszeit stillsteht, was mit einem erheblichen Produktionsausfall verbunden ist. Die Stillstandszeit der Vorrichtung ist auf eine erhebliche Anzahl von Umstellungsarbeiten zurückzuführen, um den Zugmitteltrieb der Vorrichtung auf eine geänderte Anzahl von Aufnahmefächern umzurüsten. Hierzu müssen die die Elemente mit den Aufnahmefächern tragenden Zugmittel des Zugmitteltriebes ausgetauscht werden, was unter anderem sehr zeitaufwendig ist. Bei Verwendung von Endlosketten als Zugmittel müssen diese geöffnet und gegen Ketten mit einer anderen Anzahl von Elementen mit Aufnahmefächern ausgewechselt werden, wobei die Grundeinstellung der Kettenjustierung verlorengeht, so daß die neuen Zugmittel nach ihrer Montage neu eingestellt werden müssen. Der Zeitaufwand für die Umrüstung im Fall von Zahnriemen als Zugmittel ist noch größer, weil zusätzlich noch wenigstens ein Umlenkrad des oder der Zahnriemen gelöst und verstellt werden muß, um die Zahnriemen abnehmen zu können, da diese nicht, wie eine Kette, geöffnet werden können. Auch in diesem Fall muß die Vorrichtung nach Montage der neuen Zahnriemen neu eingestellt werden.

Die Aufgabe der Erfindung besteht in der Verbesserung der einleitend angeführten Vorrichtung in der Hinsicht, daß nur eine sehr kurze Zeit erforderlich ist, um die Vorrichtung von einer höheren Eisstiellieferzahl in Anpassung an eine geringere Anzahl von mit Eisstielen zu beschickenden Speiseeisformen der Gefriermaschine auf eine dementsprechende Eisstiellieferzahl einzustellen und umgekehrt.

Die Lösung dieser Aufgabe ist in dem Kennzeichen des Patentanspruches 1 angegeben.

Mit dieser Lösung ist es auf einfache Weise und in sehr kurzer Zeit möglich, die erfindungsgemäße Vorrichtung auf die erforderliche Eisstiellieferzahl bezüglich der gerade mit Eisstielen zu beschickenden Gefrierformen der Speiseeismaschine anzupassen. Hierzu ist es lediglich erforderlich, das z. B. treibende Umlenkrad des einen Zugmittels aus seiner Arretierung zu lösen und soweit zu verdrehen, bis die gewünschte Anzahl der Sperrmittel des entsprechenden Zugmittels für eine Sperrung derjenigen Aufnahmefächer des anderen Zugmittels sorgen, die gesperrt werden sollen, wonach das treibende Umlenkrad des einen Zugmittels wieder arretiert wird. Es entfällt somit jegliches Auswechseln von Zugmitteln des Zugmitteltriebes und ein Wiedereinjustieren von eingewechselten Zugmitteln. Es ist somit in kürzester Zeit und praktisch ohne Produktionsausfall möglich, die erfindungsgemäße Vorrichtung bezüglich der gewünschten Lieferzahl der Eisstiele neu einzustellen.

Eine technisch einfach aufgebaute und kostengünstig herzustellende Ausgestaltung der erfindungsgemäßen Vorrichtung besteht darin, daß zwei äußere Zugmittel mit jeweils gleicher Anzahl von miteinander fluchtenden Aufnahmefächern und ein dazwischen angeordnetes, mittleres Zugmittel mit einer Anzahl von Sperrerhebungen als Sperrmittel vorgesehen sind und daß das mittlere Zugmittel relativ zu den beiden äußeren Zugmitteln, und umgekehrt, derart einstellbar ist, daß die Sperrerhebungen in die Fluchtlinie einiger der Aufnahmefächer bringbar sind.

In weiterer Ausbildung der erfindungsgemäßen Vorrichtung bestehen die Zugmittel aus Zahnriemen, wobei die äußeren Zahnriemen auf ihrer Oberseite mit Vertiefungen zwecks Ausbildung der Aufnahmefächer und der mittlere Zahnriemen mit Erhöhungen zwecks Ausbildung der Sperrerhebungen versehen sind. Für die Aufnahmefächer und die Sperrerhebungen sind somit keine besonderen Bauteile erforderlich, da die Aufnahmefächer und die Sperrerhebungen formmäßig bereits an den Zahnriemen ausgebildet sind.

Eine einfache Ausbildung des Zugmitteltriebes mit einer Arretierungsmöglichkeit für das mittlere Zugmittel besteht darin, daß der treibende und der getriebene Radsatz des Zugmitteltriebes einen mittleren Radkörper und zwei äußere Radkörper aufweist, und daß die mittleren Radkörper gegenüber den zugehörigen beiden äußeren Radkörpern jedes Radsatzes um einen vorbestimmten Drehwinkel entsprechend dem Sperrverstellweg des mittleren Zugmittels verdrehbar sind und wenigstens der mittlere Radkörper des einen Radsatzes in vorbestimmten Stellungen arretierbar ist. Hierzu kann der mittlere Radkörper für seine Arretierung zwei in vorbestimmtem Drehwinkel angeordnete Vertiefungen aufweisen, in die ein in einem der zugehörigen äußeren Radkörper vorgesehener, betätigbarer Arretierungsstift eingreift.

Die Erfindung ist nachstehend anhand eines in den anliegenden Zeichnungen dargestellten Ausführungsbeispieles näher erläutert. Es zeigen in schematischer und vereinfachter Darstellung:
- Fig. 1: eine Seitenansicht auf die erfindungsgemäße Vorrichtung,
- Fig. 2: eine teilweise Aufsicht auf die Vorrichtung gemäß dem Pfeil A in Fig. 1,
- Fig. 3: einen Längsschnitt nach der Linie III-III in Fig. 2,
- Fig. 4: eine teilweise Aufsicht ähnlich derjenigen in Fig. 2, jedoch mit veränderter Einstellung,
- Fig. 5: einen Längsschnitt nach der Linie V-V in Fig. 4,
- Fig. 6: einen Querschnitt nach der Linie VI-VI in Fig. 1,
- Fig. 7: einen Querschnitt nach der Linie VII-VII in Fig. 1.

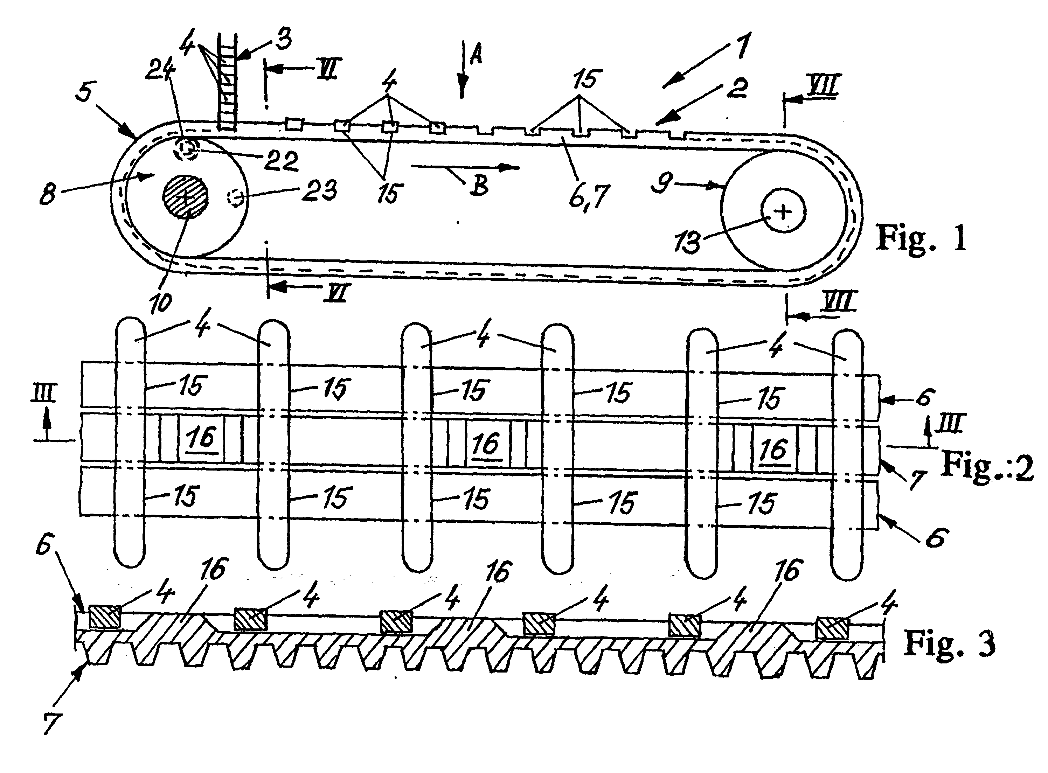

Nach Fig. 1 besteht die allgemein mit 1 bezeichnete Vorrichtung zum Vereinzeln und Einstecken von Eisstielen in eine Gefriermaschine für Speiseeis aus einer Vereinzelungseinrichtung 2, wie sie schematisch und vereinfacht in Fig. 1 gezeigt ist, und aus einer Einrichtung zum Übernehmen der vereinzelten Eisstiele von der Einrichtung 2 und Übergeben der Eisstiele an die nicht dargestellte Gefriermaschine für Speiseeis, die nicht Gegenstand der vorliegenden Erfindung ist. Die Einrichtung zum Übernehmen der Eisstiele und Einstecken derselben in die Gefrierformen der Speiseeismaschine ist ebenfalls nicht dargestellt und kann beispielsweise so ausgebildet sein wie die entsprechende Einrichtung (7) in der DE-OS 25 17 400, auf die hiermit zwecks Erläuterung Bezug genommen wird.

Die Vereinzelungseinrichtung 2 umfaßt einen Zuführschacht 3, der mit einem Vorrat an Eisstielen 4 übereinander gestapelt versorgt wird und in dem die Eisstiele von oben nach unten gefördert werden, sowie einen Zugmitteltrieb 5 zum Vereinzeln der unten aus dem Zuführschacht 3 ankommenden Eisstiele 4.

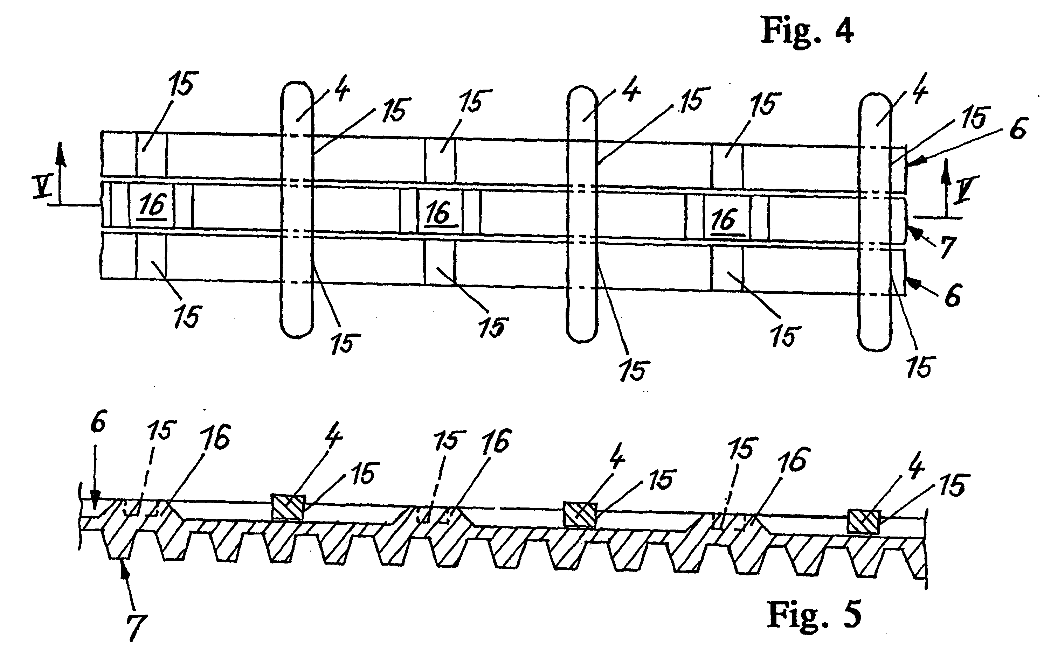

Bei dem dargestellten Auführungsbeispiel umfaßt der Zugmitteltrieb 5 vorzugsweise drei Zugmittel 6 und 7, wie es aus den Figuren 2 und 4 ersichtlich ist, sowie einen treibenden Radsatz 8 und einen getriebenen Radsatz 9 zum Antrieb und zur Umlenkung der endlosen Zugmittel. Der treibende Radsatz 8 ist auf einer Antriebswelle 10 montiert, die in Wälzlagern 11 gelagert ist. Die Welle 10 kann ein Antriebsrad 12 aufweisen, das über ein geeignetes Zugmittel angetrieben werden kann. Der getriebene Radsatz 9 ist auf einer lose mitdrehenden Welle 13 montiert, die ihrerseits in Wälzlagern 14 gelagert ist. Die Wälzlager 11 und 14 sind in dem nicht gezeigten Maschinengestell für die Vorrichtung 1 montiert, an dem auch der Zuführschacht 3 angeordnet ist.

Die beiden äußeren Zugmittel 6 und das dazwischen angeordnete Zugmittel 7 des Zugmitteltriebes 5 verlaufen parallel zueinander, laufen synchron um und ihre Obertrums befinden sich z. B. in einer gemeinsamen Ebene. Vorzugsweise bestehen die Zugmittel aus endlosen Zahnriemen, es können aber auch andere Riemenarten verwendet werden, zum Beispiel Keilriemen. Es ist ferner möglich, anstelle von Riemen als Zugmittel endlose Ketten zu wählen, z. B. Zahnketten.

Die beiden äußeren Zugmittel 6 sind im Fall der Verwendung von Riemen auf ihrer Oberseite je so ausgebildet, daß sie Vertiefungen aufweisen, die Aufnahmefächer 15 für die Eisstiele 4 bilden. Die Fächer 15 verlaufen quer über die Oberseite der Zugmittel und weisen einen Abstand voneinander auf, wie er für das spätere Einstecken der Eisstiele in die Gefriermaschine benötigt wird. Die Breite der Aufnahmefächer entspricht der Breite der Eisstiele. Die beiden äußeren Zugmittel 6 sind so zueinander eingestellt, daß die Fächer 15 des einen äußeren Zugmittels den Fächern 15 des anderen äußeren Zugmittels 6 in Fluchtlinie gegenüberliegen, so daß jeder zu vereinzelnde Eisstiel 4 in dem jeweiligen Aufnahmefach 15 beider äußeren Zugmittel 6 zu liegen kommt, wie es aus den Figuren 2 und 4 deutlich zu entnehmen ist. Die äußeren Zugmittel weisen somit immer die gleiche Anzahl von Aufnahmefächern 15 auf, und diese Anzahl entspricht in der Regel der maximalen Anzahl einer Gefrierformenreihe der Speiseeismaschine. Im Fall der Verwendung von Ketten können diese Elemente aufweisen, die ihrerseits die Aufnahmefächer 15 enthalten.

Das mittlere Zugmittel 7 ist auf seiner Oberseite mit Erhebungen 16 versehen, die Sperrmittel bilden, wie es aus den Figuren 3 und 5 deutlich zu erkennen ist. Die Anzahl der Sperrerhebungen 16 ist im allgemeinen geringer als die Anzahl der Aufnahmefächer 15 der äußeren Zugmittel 6. Der Zweck der Sperrerhebungen 16 besteht darin, zu verhindern, daß einige der paarweisen Aufnahmefächer 15 nicht mit Eisstielen 4 belegt werden können, wie noch klar wird. Hierzu weisen die Sperrerhebungen eine Höhe auf, die mindestens der Tiefe der Aufnahmefächer 15 entspricht, wie in Fig. 5 deutlich zu sehen ist.

Die Sperrerhebungen 16 des mittleren Zugmittels 7 können ebenfalls einen gleichen Abstand voneinander aufweisen. Welcher Abstand gewählt wird, hängt davon ab, wieviele der sich paarweise gegenüberliegenden Aufnahmefächer gesperrt werden sollen. In den Figuren 3 und 5 ist der Abstand der Sperrerhebungen 16 voneinander so gewählt, daß bei Verstellung des mittleren Zugmittels 7 relativ zu den beiden äußeren Zugmitteln 6 jedes zweite Paar Aufnahmefächer 15 gesperrt wird. In der Stellung des mittleren Zugmittels 7 gemäß Fig. 3 ist keines der Aufnahmefächerpaare der äußeren Zugmittel 6 gesperrt, während Fig. 5 zeigt, daß jedes zweite Aufnahmefächerpaar gesperrt ist und keinen Eisstiel aufweist. Somit wird gemäß Fig. 5 nur die halbe Anzahl der maximal möglichen Anzahl Eisstiele 4 zu der Gefriermaschine geliefert. Die Sperrung der Aufnahmefächer 15 ergibt sich dadurch, daß ein Hereinfallen von Eisstielen in die Fächer durch die Sperrerhebungen 16 verhindert wird, indem diese ein Herausfallen von Eisstielen aus dem Zuführschacht 3 stoppen, wenn sie unter diesem Schacht durchlaufen.

Es ist jedoch auch möglich, den Abstand der Sperrerhebungen 16 des Zugmittels 7 so zu wählen, daß beispielsweise jedes dritte Aufnahmefächerpaar gesperrt wird. Es ist auch denkbar, die Sperrerhebungen 16 mit unterschiedlichem Abstand voneinander an dem mittleren Zugmittel vorzusehen, so daß es möglich ist, entweder jedes zweite oder jedes dritte Aufnahmefächerpaar zu sperren. Weiterhin ist es denkbar, die Sperrerhebungen 16 so anzuordnen, daß über eine Teilstrecke zunächst alle Aufnahmefächerpaare mit Eisstielen belegt werden können, während die Aufnahmefächerpaare für die jeweils verbleibende Teilstrecke im Obertrum vollständig gesperrt bleiben.

Aus Vorstehendem ergibt sich, daß das mittlere Zugmittel 7 relativ zu den beiden äußeren Zugmitteln 6 derart einstellbar ist, daß die Sperrerhebungen 16 des mittleren Zugmittels in die Fluchtlinie von einigen der maximal vorhandenen Aufnahmefächer 15 der äußeren Zugmittel bringbar sind, um eine jeweils gewünschte Anzahl von Aufnahmefächerpaaren zu sperren, wenn die maximale Leistung der Speiseeismaschine nicht genutzt werden soll oder wenn eine Speiseeismaschine mit weniger Gefrierformen je Reihe mit Eisstielen zu beschicken ist. Selbstverständlich kann die hier vorgeschlagene Vorrichtung jederzeit wieder auf eine höhere und auf die maximale Lieferzahl für die Eisstiele eingestellt werden.

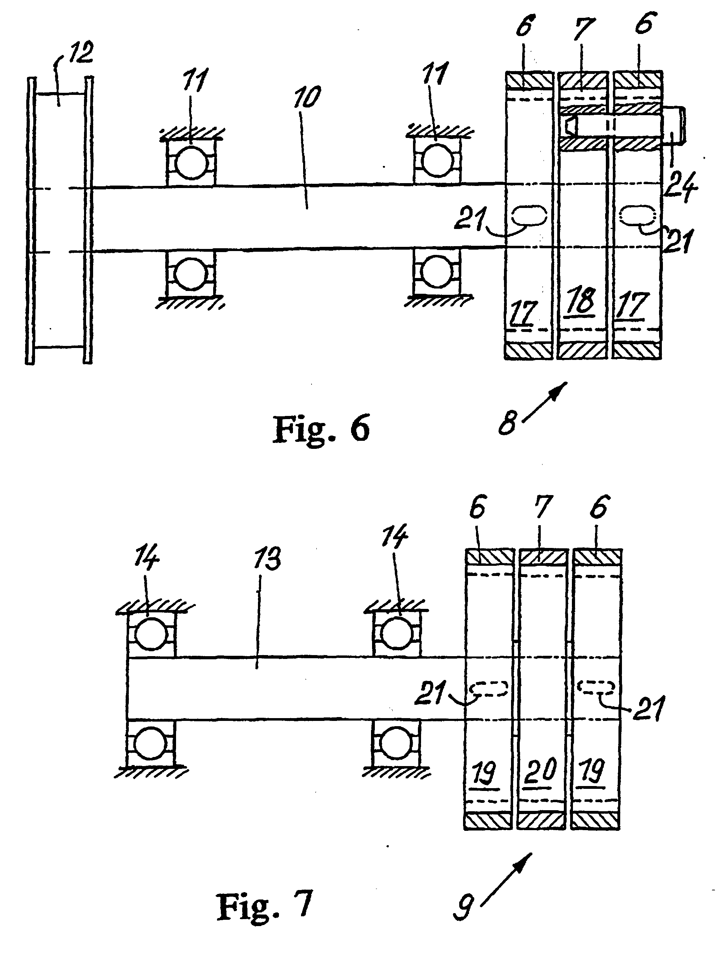

Die Radsätze 8 und 9 bestehen je aus drei Radkörpern, die im vorliegenden Fall gemäß den Figuren 6 und 7 aus Einzelrädern bestehen und jeweils gemeinsam auf den Wellen 10 und 13 angeordnet sind. Während die äußeren Radkörper 17 bzw. 19 für die äußeren Zugmittel 6 vorgesehen sind, läuft das mittlere Zugmittel 7 auf dem jeweils mittleren Radkörper 18 bzw. 20. Während die äußeren Radkörper 17 bzw. 19 auf den Wellen 10 bzw. 13 drehfest angeordnet sind, beispielsweise mittels einer Paßfeder 21, ist der jeweils mittlere Radkörper 18 bzw. 20 lose dreheinstellbar auf der zugehörigen Welle angeordnet.

Dem jeweils gewünschten Verstellweg des mittleren Zugmittels 7, um die entsprechenden Sperrerhebungen 16 in Stellung zu bringen, entspricht ein bestimmter Drehwinkel der mittleren Radkörper 18 und 20. Um das mittlere Zugmittel 7 einzustellen, reicht es aus, wenn der mittlere Radkörper eines der Radsätze 8 und 9 in der jeweils gewünschten Stellung arretierbar ist. Im vorliegenden Fall ist der treibende Radsatz 8 dementsprechend ausgebildet.

Um den betreffenden mittleren Radkörper, im vorliegenden Fall der Radkörper 18, in seiner jeweiligen Stellung zu arretieren, kann so vorgegangen sein, daß dieser Radkörper an einem der zugehörigen äußeren Radkörper arretierbar ist. Im vorliegenden fall ist der mittlere Radkörper 18 gemäß Figur 6 am rechten äußeren Radkörper 17 arretierbar.

Eine mögliche Arretierungsausbildung ist aus den Figuren 1 und 6 zu entnehmen. Fig. 1 zeigt zwei axiale Vertiefungen in Form von Löchern 22 und 23, die in bezug zueinander in einem vorbestimmten Drehwinkel in dem mittleren Radkörper 18 angeordnet sind. Dieser Drehwinkel ist abgestimmt auf den entsprechenden Verstellweg des mittleren Zugmittels 7, um die gewünschten Sperrerhebungen 16 dieses Zugmittels in ihre jeweilige Sperrstellung zu bringen. Wenn verschiedene Verstellwege einzustellen sind, wird der mittlere Radkörper mehr als zwei Arretierungsvertiefungen aufweisen.

In die genannten Vertiefungen 22 und 23 greift ein betätigbarer Arretierungsstift 24 ein. Dieser Stift 24 ist in dem äußeren Radkörper 17 in geeigneter Weise unverlierbar angeordnet und ferner so gelagert, daß er so weit zurückgezogen werden kann, um den mittleren Radkörper 18 verdrehen zu können. In der jeweils gewünschten Stellung greift der Stift 24 in das Loch 22 oder 23 ein und wird selbsttätig in dieser Stellung gehalten, beispielsweise durch Federkraft.

In alternativer Ausbildung der Radsätze 8 und 9 kann auch so vorgegangen sein, daß jeweils ein Grundkörper vorgesehen ist, der beispielsweise in einstückiger Ausbildung den inneren Radkörper 17 bzw. 19 aufweist und mit der Welle 10 bzw. 13 drehfest verbunden ist. Auf dem Grundkörper ist dann der mittlere Radkörper 18 bzw. 20 dreheinstellbar gelagert. Auf dem Grundkörper folgt dann der rechte Radkörper 17 bzw. 19 als gesondertes Bauteil, der bzw. das mit dem Grundkörper verblockt ist. Die Arretierung des jeweils mittleren Radkörpers kann auch hierbei so ausgebildet sein, wie es in Verbindung mit Fig. 6 gezeigt und beschrieben ist.

In alternativer Ausgestaltung können die Radsätze 8, 9 auch so ausgebildet sein, daß die mittleren Radkörper 18, 20 drehfest an den Wellen 10 und 13 angeordnet sind, während die jeweils äußeren Radkörper darauf entsprechend dem erforderlichen Drehwinkel drehverstellbar sind. Die äußeren Radkörper sind dann beispielsweise an dem zugehörigen mittleren Radkörper in vorstehend beschriebener Weise arretierbar. Ferner ist es auch möglich, mehr als ein Zugmittel 7 mit Sperrmitteln 16 vorzusehen.

In Abänderung des vorstehend beschriebenen Ausführungsbeispieles kann eine Ausführungsform (nicht gezeigt) auch darin bestehen, daß nur zwei relativ zueinander einstellbare Zugmittel nebeneinander vorgesehen sind. In diesem Fall befindet sich seitlich neben dem Zugmittel 7 mit den Sperrmitteln nur ein einziges Zugmittel mit den Aufnahmefächern 15 für die Eisstiele 4. Die Sperrmittel an dem Zugmittel 7 können aus flachen, sich von diesem Zugmittel wegerstreckenden Körpern (nicht gezeigt) bestehen, die z. B. kurvengesteuert bei entsprechender Längsverstellung eines der beiden Zugmittel in die gewünschten Aufnahmefächer 15 des anderen Zugmittels bringbar sind. Sind auf diese Weise einige der Aufnahmefächer 15 gesperrt, laufen beide endlosen Zugmittel um. Sind die Sperrmittel außer Eingriff, kann das die Sperrmittel tragende Zugmittel in diesem Fall auch stillstehen.

## Patentansprüche

1. Vorrichtung zum Vereinzeln und Einstecken von Eisstielen in eine Gefriermaschine für Speiseeis, umfassend einen Zugmitteltrieb zum Vereinzeln der von oben übereinander gestapelt ankommenden Eisstiele und Weiterförderung derselben in eine Zwischenposition, aus der die Eisstiele übernommen und in mit Speiseeisportionen gefüllte Formen der Gefriermaschine eingesteckt werden, wobei der Zugmitteltrieb wenigstens ein Zugmittel aufweist, das mit einer Vielzahl von einen vorbestimmten Abstand voneinander aufweisenden Aufnahmefächern für jeweils einen Eisstiel versehen ist, **dadurch gekennzeichnet, daß** dem Zugmittel (6) mit den Aufnahmefächern (15) wenigstens ein Zugmittel (7) mit einer Anzahl von Sperrmitteln (16) seitlich zugeordnet ist und daß das eine Zugmittel relativ zu dem anderen Zugmittel derart einstellbar ist, daß die Sperrmittel (16) während des Umlaufes beider Zugmittel für die Sperrung einer gewünschten Anzahl der Aufnahmefächer (15) sorgen.

2. Vorrichtung nach Anspruch 1, **dadurch gekennzeichnet, daß** zwei äußere Zugmittel (6) mit jeweils gleicher Anzahl von miteinander fluchtenden Aufnahmefächern (15) und ein dazwischen angeordnetes, mittleres Zugmittel (7) mit einer Anzahl von Sperrerhebungen (16) als Sperrmittel vorgesehen sind und daß das mittlere Zugmittel (7) relativ zu den beiden äußeren Zugmitteln (6), oder umgekehrt, derart einstellbar ist bzw. sind, daß die Sperrerhebungen (16) in die Fluchtlinie der gewünschten Aufnahmefächer (15) bringbar sind.

3. Vorrichtung nach Anspruch 1 oder 2, **dadurch gekennzeichnet, daß** die Zugmittel (6, 7) aus Riemen bestehen, deren Oberseiten mit Vertiefungen zwecks Ausbildung der Aufnahmefächer (15) bzw. mit Erhöhungen zwecks Ausbildung der Sperrerhebungen (16) versehen sind.

4. Vorrichtung nach Anspruch 1, 2 oder 3, **dadurch gekennzeichnet, daß** die Zugmittel (6, 7) aus Zahnriemen bestehen.

5. Vorrichtung nach Anspruch 2, 3 oder 4, **dadurch gekennzeichnet, daß** der treibende und der getriebene Radsatz (8, 9) des Zugmitteltriebes (5) einen mittleren Radkörper (18, 20) und zwei äußere Radkörper (17; 19) aufweist und daß vorzugsweise die mittleren Körper (18, 20) gegenüber den zugehörigen beiden äußeren Radkörpern (17; 19) des Radsatzes in einen vorbestimmten Drehwinkel entsprechend dem Verstellweg des mittleren Zugmittels dreheinstellbar sind und wenigstens der mittlere Radkörper eines des Radsätze in Endstellungen arretierbar ist.

6. Vorrichtung nach Anspruch 5, **dadurch gekennzeichnet, daß** der mittlere Radkörper (18, 20) wenigstens eines Radsatzes (8, 9) an einem der zugehörigen äußeren Radkörper (17, 19) arretierbar ist.

7. Vorrichtung nach Anspruch 5 oder 6, **dadurch gekennzeichnet, daß** der mittlere Radkörper (18, 20) eines der Radsätze (8, 9) für seine Arretierung relativ zu den äußeren Radkörpern (17, 19) zwei in dem vorbestimmten Drehwinkel angeordnete Vertiefungen (22, 23) aufweist, in die ein in einem der zugehörigen äußeren Radkörper (17, 19) vorgesehener, betätigbarer Arretierungsstift (24) eingreift.

8. Vorrichtung nach Anspruch 5, 6 oder 7, **dadurch gekennzeichnet, daß** die Radkörper (17, 18; 19, 20) jedes Radsatzes (8; 9) des Zugmitteltriebes (5) aus auf einer gemeinsamen Welle (10; 13) gelagerten Einzelrädern bestehen.

## Claims

1. A device for isolating for isolating and inserting ice cream sticks into a freezing machine for ice cream, comprising a traction means drive for isolating the ice cream sticks coming from above stacked over one another and for conveying these into an intermediate position from which the ice cream sticks are taken over and inserted into moulds of the freezing machine filled with portions of ice cream, wherein the traction means drive comprises at least one traction means which is provided with a multitude of receiving compartments having a predetermined distance to one another for in each case on ice cream stick, **characterised in that** at least on traction means (7) with a number of blocking means (16) is laterally allocated to the traction means (6) with the receiving compartments (15) and that the one traction means may be adjusted relative to the other traction means in a manner such that the blocking means (16) during the revolving of both traction means ensure the blocking of a desired number of receiving compartments (15).

2. A device according to claim 1, **characterised in that** there are provided two outer traction means (6) with in each case the same number of receiving compartments (15) flush with one another and a middle traction means (7) arranged therebetween with a number of blocking projections (16) as blocking means, and that the middle tractions means (7) may be adjusted relative to the two outer traction means (6), or vice versa, such that the blocking projections (16) may be brought into the line of alignment of the desired receiving comportments (15).

3. A device according to claim 1 or 2, **characterised in that** the traction means (6, 7) consist of belts whose upper sides are provided with recesses for the purpose of forming the receiving compartments (15) or with projections for the purpose of forming the blocking projections (16).

4. A device according to claim 1, 2 or 3, **characterised in that** the traction means (6, 7) consist of toothed belts.

5. A device according to claim 2, 3 or 4, **characterised in that** the driving or driven set of wheels (8, 9) of the traction means drive (5) comprises a middle wheel body (18, 20) and two outer wheel bodies (17; 19) and that preferably the middle bodies (18, 20) with respect to the associated two outer wheel bodies (17, 19) of the set of wheels may be rotationally adjusted at a predetermined rotational angel corresponding to the adustment path of the middle traction means and at least the middle wheel body of one of the set of wheels may be locked in end positions.

6. A device according to claim 5, **characterised in that** the middle wheel body (18, 20) of a least one set of wheels (8, 9) may be locked on one of the associated outer wheel bodies (17, 19).

7. A device according to claim 5 or 6, **characterised in that** the middle wheel body (18, 20) of one of the sets of wheels (8, 9) for its locking relative to the outer wheel bodies (17, 19) comprises two recesses (22, 23) arranged at a predetermined rotational angle, into which there engages an actuatable locking pin (24) provided in one of the associated outer wheel bodies (17, 19).

8. A device according to claim 5, 6 or 7, **characterised in that** the wheel bodies (17, 18; 19, 20) of each set of wheels (8, 9) of the traction means drive (5) consist of individual wheels mounted on a common shaft (10; 13).

## Revendications

1. Dispositif destiné à séparer et insérer des bâtonnets de glace dans une machine à congeler pour crèmes glacées ou glace alimentaire, comprenant un système de transfert à moyens de traction pour séparer les bâtonnets de glace arrivant du haut en étant empilés les uns sur les autres, et pour poursuivre leur transport dans une position intermédiaire, à partir de laquelle les bâtonnets de glace sont prélevés et enfoncés dans des moules remplis de portions de glace alimentaire, le système de transfert à moyens de traction présentant au moins un moyen de traction qui est pourvu d'un grand nombre d'emplacements de logement présentant une distance d'espacement mutuel prédéterminé et destinés chacun à un bâtonnet de glace,
**caractérisé en ce qu'**au moyen de traction (6) comprenant les emplacements de logement (15) est associé latéralement, au moins un moyen de traction (7) avec un certain nombre de moyens de blocage (16), et **en ce que** ledit un moyen de traction peut être réglé relativement par rapport à l'autre moyen de traction de façon à ce que les moyens de blocage (16), durant la révolution des deux moyens de traction, assurent le blocage d'un nombre souhaité d'emplacements de logement (15).

2. Dispositif selon la revendication 1, **caractérisé en ce que** sont prévus deux moyens de traction (6) extérieurs comportant chacun le même nombre d'emplacements de logement (15) mutuellement alignés, et un moyen de traction (7) central disposé entre les deux précédents et comportant un certain nombre de protubérances de blocage (16) en guise de moyens de blocage, et **en ce que** le moyen de traction central (7) peut être réglé relativement par rapport aux deux moyens de traction extérieurs (6) ou inversement de façon à ce que les protubérances de blocage (16) puissent être amenées dans la ligne d'alignement des emplacements de logement (15) souhaités.

3. Dispositif selon la revendication 1 ou 2, **caractérisé en ce que** les moyens de traction (6, 7) sont constitués par des courroies dont les faces supérieures sont pourvues de creux pour former les emplacements de logement (15), et respectivement de bossages pour former les protubérances de blocage (16).

4. Dispositif selon la revendication 1, 2 ou 3, **caractérisé en ce que** les moyens de traction (6, 7) sont constitués par des courroies crantées.

5. Dispositif selon la revendication 2, 3 ou 4, **caractérisé en ce que** le jeu de roues ou poulies menant et mené (8, 9) du système de transfert à moyens de traction (5) comprend un corps de poulie central (18, 20) et deux corps de poulie extérieurs (17 ; 19), et **en ce que** de préférence les corps centraux (18, 20) peuvent être réglés en rotation conformément à un angle de rotation correspondant à la course de déplacement de réglage du moyen de traction central, et au moins le corps de poulie central de l'un des jeux de poulies peut être bloqué dans des positions extrêmes.

6. Dispositif selon la revendication 5, **caractérisé en ce que** le corps de poulie central (18, 20) de l'un au moins des jeux de poulies (8, 9) peut être bloqué sur l'un des corps de poulie extérieur (17, 19) associé correspondant.

7. Dispositif selon la revendication 5 ou 6, **caractérisé en ce que** le corps de poulie central (18, 20) de l'un des jeux de poulies (8, 9), pour son blocage par rapport aux corps de poulie extérieurs (17, 19), présente deux creux (22, 23) disposés selon l'angle de rotation prédéterminé et dans lesquels s'engage une broche de blocage (24) pouvant être actionnée et prévue dans l'un des corps de poulie (17, 19) associés.

8. Dispositif selon la revendication 5, 6 ou 7, **caractérisé en ce que** le corps de poulie (17, 18 ; 19, 20) de chaque jeu de poulies (8 ; 9) du système de transfert à moyen de traction (5), sont constitués par des poulies individuelles montées sur un arbre commun (10 ; 13).
